# EUROPÄISCHE PATENTSCHRIFT

(11) **EP 2 148 522 B1**
(45) Veröffentlichungstag und Bekanntmachung des Hinweises auf die Patenterteilung: **23.09.2020**
(21) Anmeldenummer: 09009310.5
(22) Anmeldetag: 17.07.2009
(51) Int. Cl.: H04Q 9/00

(54) **Anordnung zur Auswertung der Messwerte eines Messwertwandlers**
Assembly for evaluating the measurement values of a measurement value converter
Agencement d'évaluation des valeurs de mesure d'un convertisseur de valeurs de mesure

(30) Priorität: 23.07.2008 DE 102008034318
(43) Veröffentlichungstag der Anmeldung: 27.01.2010
(73) Patentinhaber: Robert Bosch GmbH, 70442 Stuttgart (DE)
(72) Erfinder: Bund, Gerhard, 97816 Lohr-Rodenbach (DE)

(56) Entgegenhaltungen:
- EP-A1- 1 873 597
- EP-A2- 1 006 691
- US-A1- 2005 021 712

## Beschreibung

Die Erfindung betrifft eine Anordnung zur Auswertung der Messwerte eines Messwertwandlers gemäß dem unabhängigen Anspruch 1 sowie eine Einrichtung gemäß dem unabhängigen Anspruch 16.

Zur Erfassung von Drehwinkeln, beispielsweise in Verbindung mit elektrischen Maschinen, sind sogenannte inkrementelle Drehgeber (Encoder) bekannt. Diese Encoder wandeln die Eingangsgröße, nämlich den Drehwinkel beispielsweise eines Rotors, in eine Anzahl von elektrischen Impulsen. Die Wandlung kann beispielsweise mittels einer Drehscheibe mit radialen durchlässigen Schlitzen durch opto-elektronische Abtastung realisiert werden.

Die Anzahl dieser Schlitze legt die Auflösung (Impulse pro Umdrehung) fest. Derartige Inkrementalgeber dienen beispielsweise zur Feststellung eines Drehwinkels innerhalb eines Drehbereichs von 0 bis 360 Grad. Möchte man über 360 Grad hinausgehende Drehungen erfassen, so sind sogenannte Multiturngeber (Absolutwertgeber) bekannt. Diese umfassen zusätzlich zur Kodierscheibe für die Erfassung der Winkelposition weitere Codierscheiben, um auch über 360 Grad hinaus gehende Umdrehungen zu erfassen.

Zur Erfassung von Drehbewegungen sind auch sogenannte Resolver bekannt. Mittels eines Resolvers wird die absolute Lage der Motorwelle ermittelt. Er besteht aus einer Rotorspule und zwei um 90 Grad zueinander versetzten Statorwicklungen und arbeitet nach dem Prinzip des Drehtransformators. Zusätzlich hat der Resolver im Stator und auf dem Rotor je eine Hilfswicklung, um eine bürstenlose Spannungsversorgung zu gewährleisten. Je nach Lage des Rotors werden in den Statorwicklungen unterschiedlich hohe Spannungen induziert. Die Spannungen an den beiden Statorwicklungen werden von der Versorgungsspannung transformatorisch moduliert und haben sinusförmige Hüllkurven. Die beiden Hüllkurven sind um 90 Grad elektrisch zueinander versetzt und werden im Umrichter auf Nulldurchgang und Amplitude ausgewertet. Damit werden absolute Rotorlage, Drehzahl und Drehrichtung ermittelbar.

Die zuvor genannten sogenannten Gebersysteme basieren auf unterschiedlichsten Prinzipien und erfordern unterschiedlichste Ansteuerungen bzw. liefern unterschiedlichste - Signalformen. Jeder Gebertyp erfordert demnach eine für ihn spezifische Schnittstelle. Die Offenlegungsschrift DE 34 456 17 A1 zeigt beispielsweise ein Verfahren und eine Anordnung zur seriellen Übertragung der digitalen Messwerte eines Messwertwandlers mittels einer für den hier gezeigten Geber relevanten Schnittstelle. Zur Übertragung der digitalen Messwerte eines Messwertwandlers, insbesondere eines Winkelcodierers oder eines Wegemesscodierers, werden die parallel anstehenden Messwerte in einem Parallel-Seriell-Schieberegister gespeichert und seriell im Takt einer Taktimpulsfolge übertragen, die von einer die Messwerte aufnehmenden Verarbeitungseinheit erzeugt wird. Diese synchrone und serielle Übertragung ermöglicht eine einfache Verarbeitung der übertragenen Daten und eine hohe Baudrate der Datenübertragung.

Es ist leicht erkennbar, dass die in Verbindung mit der zuvor genannten Offenlegungsschrift erläuterte Funktionsweise beispielsweise von der zuvor erläuterten Funktionsweise in Verbindung mit dem Resolver abweicht.

Zur Ansteuerung von elektrischen Maschinen, insbesondere von elektrischen Servomotoren, sind sogenannte Antriebsregeleinrichtungen oder Antriebsverstärker erforderlich. Diese Einrichtungen versorgen einen Drehstrommotor mit beispielsweise einem dreiphasigen Strom und regeln gleichzeitig Position und Drehzahl unter Verwendung der zuvor genannten Messwertwandlersignale. Die hierzu wiederum erforderlichen Messwertwandler sind an dem rotierenden bzw. sich bewegenden Teil des Motors angeordnet. Wird ein solcher Messwertwandler von der Einrichtung verwendet, so findet sich die Gesamtanordnung im sogenannten Closed-Loop Betrieb. Es besteht also ein geschlossener Regelkreis und die Einrichtung verarbeitet kontinuierlich die vom Messwertwandler erzeugten Signale im Rahmen der Ansteuerung des elektrischen Servomotors.

In der Automatisierungsbranche existieren eine Vielzahl von Messwertwandlervarianten. Die Hersteller von Automatisierungskomponenten sind bestrebt möglichst viele Messwertwandlertypen zu unterstützen. Es besteht daher nun das Problem, dass ein Antriebsregelgerät bzw. ein Antriebsverstärker zur Unterstützung möglichst vieler Messwertwandler eine entsprechende Vielzahl von Messwertwandlerschnittstellen aufweisen müsste. Dies erfordert wiederum einen erhöhten hardwareseitigen Aufwand und einen erhöhten softwareseitigen Aufwand. Außerdem wird die Bedienung aufwändiger, weil der korrekte Wandler bei der Inbetriebnahme manuell vom Inbetriebnahmepersonal konfiguriert werden muss. Um diesen Aufwand zu vermeiden, wäre es möglich verschiedene Antriebsreglervarianten bzw. Antriebsverstärker bereit zu stellen, welche auf spezielle Messwertwandlertypen zugeschnitten sind. Hierdurch würde jedoch eine großen Varianten- bzw. Versionsvielfalt entstehen, was von den Herstellern wegen des damit verbundenen Kostenaufwandes nicht gewünscht ist. Außerdem würde sich damit der Aufwand beim Kunden des Komponentenherstellers ebenfalls erhöhen, da im Rahmen der Projektierung und Planung die zuvor gennannte Variantenvielfalt berücksichtigt und verwaltet werden müsste.

Aus der EP 1 873 597 A1 ist eine Anordnung zur Auswertung von Messwerten anhand eines Anschlussmoduls zum Anschluss eines Sensors an einen Bus bekannt. Es] wird zudem erwähnt, dass die Sensorschnittstelle (als Teil des Anschlussmoduls) zur Kommunikation mit Standardschnittstellen verschiedener Sensortypen ausgebildet sein kann.

Die EP 1 006 691 A2 offenbart eine Vorrichtung, die an einen Bus angeschlossen wird und bei der anhand einer Analyse der Bus-Kommunikation die Art des Kommunikationsprotokolls ausgewählt wird. Damit ist eine Schnittstelle vorhanden, die für verschiedene Messwertdatenübertragungen verwendet werden kann.

Die Aufgabe der Erfindung ist es daher eine Anordnung zur Auswertung der Messwerte eines Messwertwandlers zu realisieren, welche in eine Automatisierungskomponente leicht integrierbar ist und welche eine Vielzahl von unterschiedlichen Messwertwandlersignalen verarbeiten kann.

Die Erfindung löst diese Aufgabe, indem eine zuvor genannte Anordnung mit einem Auswertemittel und mit einem Verbindungsmittel zur Anbindung des Auswertemittels an den Messwertwandler vorgesehen wird, wobei das Verbindungsmittel wiederum Mittel 25 umfasst, welche zumindest teilweise derart konfigurierbar sind, dass eine Anbindung des Auswertemittels an sich bezüglich der Messwertdatenübertragung unterscheidende Messwertwandler realisierbar ist. Dies hat den Vorteil, dass nur eine einzige mechanische Schnittstelle zur Verbindung des Messwertwandlers mit der Anordnung vorgesehen werden muss, was zu einer hardwareseitigen Einsparung führt. Auch die Variantenvielfalt und die möglichen Steckerkombinationen werden damit auf ein Minimum reduziert.

Die Tatsache, dass das zuvor genannte Verbindungsmittel bezüglich der Messwertdatenübertragung durch Verwendung geeigneter Mittel konfigurierbar ist, ermöglicht neben der bereits erwähnten mechanischen universellen Anbindungsmöglichkeit eines Messwertwandlers auch die elektrische universelle Anbindungsmöglichkeit eines Messwertwandlers an die Anordnung.

Die vorgesehene Konfigurierbarkeit erhöht die Flexibilität und das Anwendungsspektrum. Außerdem hat die erfindungsgemäße Lösung den Vorteil, dass ein zum Betrieb einer Automatisierungskomponente, welche die erfindungsgemäße Anordnung in der Regel umfasst, vorhandenes Computerprogramm (z.B. Firmware eines Antriebsverstärkers) durch geringfügige Modifikationen derart leicht erweitert werden kann, dass auch die Konfiguration der erfindungsgemäßen Anordnung mittels der Bedienoberfläche bzw. einem HMI (Human Machine Interface) erfolgen kann.

Vorzugsweise ist eine Umschaltmöglichkeit zwischen zumindest einer asynchronen und einer synchronen Messwertdatenübertragung vorgesehen. Damit werden diejenigen Messwertwandler unterstützt, welche sowohl asynchrone und/oder synchrone Messwertdatenübertragungsprinzipien verwenden. Zwischen diesen Messwertwandlern kann dann durch einfaches beispielsweise softwaremäßiges Umkonfigurieren mittels der Anordnungen umgeschaltet werden.

Zur Realisierung der asynchronen Messwertdatenübertragung ist vorzugsweise ein erstes Datenübertragungsmittel vorgesehen, welches zwischen Sendebetrieb und Empfangsbetrieb umschaltbar ist. Die Flexibilität der Anordnung wird weiter dadurch erhöht, dass zur Realisierung der synchronen Messwertdatenübertragung ein zweites Datenübertragungsmittel vorgesehen ist, welches derart realisiert ist, dass dieses einen Takt erzeugen kann, wobei das Senden und Empfangen von Messwertdaten mittels des ersten Datenübertragungsmittels erfolgt.

Diese Ausgestaltungsform der erfindungsgemäßen Anordnung ermöglicht es, dass das zuvor schon genannte Mittel zur asynchronen Datenübertragung nun auch für die synchrone Datenübertragung genutzt werden kann, indem es den Part des Sendens und Empfangens von Messwertdaten übernimmt. Das zweite Datenübertragungsmittel liefert den für die synchrone Datenübertragung erforderlichen Synchronisationstakt. Die zuvor genannte Flexibilität wird dadurch weiter erhöht, dass die verwendeten Datenübertragungsmittel in der Lage sind auch gleichzeitig Daten zu senden und/oder zu empfangen. Man erreicht mit den zuvor genannten Maßnahmen ebenso, dass die Anzahl der Anschlusspins zur mechanischen Anbindung des Messwertwandlers an die Anordnung auf ein Mindestmaß reduzierbar ist, da ein und dasselbe Datenübertragungsmittel für unterschiedlichste Messwertdatenübertragungsverfahren verwendet werden kann.

Zur Konfiguration der Anordnung wird vorzugsweise eine Ansteuermatrix vorgesehen. Die Ansteuermatrix könnte beispielsweise in Form einer Tabelle in einem Speicher abgelegt sein. Der Speicher könnte beispielsweise ein von der erfindungsgemäßen Anordnung umfasster nicht flüchtiger Speicher sein oder ein von einem Antriebsregelgerät oder einem Antriebsverstärker umfasster Speicher, welcher gleichzeitig auch Parameter zur Parametrierung des Antriebsregelgeräts bzw. des Antriebsverstärkers umfasst. Die zuvor genannte Tabelle könnte beispielsweise aus einer Vielzahl von Zeilen und Spalten organisiert sein, wobei beispielsweise mittels jeder Zeile ein separates zu unterstützendes Messdatenübertragungsverfahren definiert ist, und wobei mittels jeder Spalte die für diese Messdatenübertragungsverfahren erforderliche Konfiguration und/oder Aktivierung der zur Realisierung des Messdatenübertragungsverfahren erforderlichen Mittel der Anordnung definiert ist. Mittels einer solchen Ansteuermatrix könnte dann beispielsweise zwischen verschiedenen Messwertwandlern umgeschaltet werden, die auf unterschiedlichsten Messwertübertragungsverfahren basieren. Beispielhaft könnte man damit folgende Standards bzw. Messwertübertragungsmethoden unterstützen: Hyperface, SSI, Verfahren basierend auf Rechtecksignalen oder Sinussignalen, Resolver oder Messwertwandler basierend auf dem sogenannten Panasonic-Standard.

Vorzugsweise sind zur Konfiguration Konfigurationsparameter vorgesehen. Diese Konfigurationsparameter können in Form von binären Codes beispielsweise in Form von 8, 16, 32 oder 64 Bit Worten realisiert sein. Die Konfigurationsparameter könnten beispielsweise in einem Speicher der Anordnung abgelegt sein. Mittels der einzelnen Bits dieser Worte ist es möglich Konfigurationen der Anordnung durchzuführen und einzelne Komponenten bzw. Mittel der Anordnung gezielt einzuschalten bzw. abzuschalten, je nachdem, welches Messwertdatenübertragungsverfahren bzw. welcher Messwertwandler mittels der Mittel unterstützt werden soll. Es ist auch möglich die Anordnung mit einem Parametrierinterface zu versehen, über welches die Konfigurationsparameter in die Anordnung eingespeist werden können. Diese Lösung wäre dann vorzuziehen, wenn die Anordnung beispielsweise in einem ebenso mittels Parameter parametrierbaren Antriebsregler integriert ist, wobei dann bei der Parametrierung des Antriebreglers die erfindungsgemäße Anordnung parallel zum Antriebsregler mittels des Parametrierinterfaces parametriert werden könnte.

Vorzugsweise wird das Ansteuermittel mittels eines programmierbaren Logikbausteins realisiert (FPGA). Durch die Verwendung von programmierbaren Logikbausteinen reduziert sich der Hardwareaufwand drastisch und die erforderlichen Funktionen können leicht und preiswert implementiert werden. Im Auswertemittel können die unterschiedlichen Kommunikationsprotokollbibliotheken zur Durchführung der Realisierung einer Kommunikation mit dem Messwertwandler abgespeichert werden. Es wäre selbstverständlich auch möglich diese Bibliotheken in einem separaten Speicher vorzuhalten.

Vorzugsweise umfasst die Anordnung auch eine Steuerspannungserzeugung. Diese hat den Vorteil, dass ein Resolver an die Anordnung anschließbar wird. Zur Unterstützung von Resolvern kann die Anordnung ein alternierendes Erregersignal erzeugen, welches an den Resolver übertragbar ist und welches in Form zweier voneinander getrennter und in einer Phase verschobenen und von einer Hüllkurve umgebenen Signale von der Anordnung wiederum empfangbar ist.

Von der erfindungsgemäßen Anordnung sind vorzugsweise nach folgenden Prinzipien übermittelte Messwerte auswertbar: Endat Standard, Hyperface-Standard, SSI-Standard, Rechtecksignale (zweispurig mit Referenzimpuls), Sinussignale (zweispurig mit Referenzimpuls), Resolver, Panasonic-Standard. Die für diese Standards erforderlichen Kommunikationsprotokolle bzw. Messwertdatenübertragungsprinzipien werden in der Anordnung vorgehalten. Die Implementierung der Standards ist mittels einer Logik realisiert, welche vom programmierbaren Logikbaustein umfasst sein kann und mittels dieses Logikbausteins ausführbar sein kann.

Besonders bevorzugt ist die Anordnung derart realisiert, dass mittels einer einzigen elektrischen Leitung (Senseleitung) die Versorgungsspannung des Messwertwandlers messbar ist, wobei bei Unterschreitung eines parametrierbaren Schwellwertes dieser Versorgungsspannung dieselbe unter Berücksichtigung des Messwertes im wesentlichen bis zum Schwellwert wieder angehoben werden kann. Es wird dabei angenommen, dass der Spannungsabfall auf der Versorgungsleitung dem Spannungsabfall der Ground-Leitung (GND) weitestgehend entspricht. Die am Messwertwandler anliegende Versorgungsspannung wird hierzu auf die erfindungsgemäße Anordnung geführt, wobei diese einen Spannungsregler umfasst, der unter Berücksichtigung des im wesentlichen verdoppelten Messwertes derart eingestellt wird (Regelfunktion), dass am Gebersystem unter Berücksichtigung der ermittelten Versorgungsspannungsabweichung vom gewünschten Normwert die gewünschte Versorgungsspannung ansteht. Dies hat den Vorteil, dass die Spannung am Gebersystem bzw. am Messwertwandler konstant auf beispielsweise 5 Volt gehalten werden kann und dass die Ausregelung der Versorgungsspannung für den Messwertwandler mittels einer einzigen Leitung realisiert werden kann. Hierdurch reduziert sich die Anzahl der Verbindungspins für die mechanische Schnittstelle der Anordnung.

Das Verbindungsmittel umfasst vorzugsweise ein mechanisches Verbindungsmittel zur lösbaren mechanischen Verbindung des Messwertwandlers mit dem Auswertemittel als auch ein Messmittel zur Erfassung der charakteristischen Eigenschaften der Messwerte des Messwertwandlers als auch ein Digitalisierungsmittel zur Digitalisierung der Messwerte des Messwertewandlers als auch ein Spannungsversorgungsmittel zur Erzeugung von insbesondere zumindest zwei Spannungspegeln. Durch diese zusammenwirkenden Mittel können analoge Signale digitalisiert bzw. gemessen werden, Referenzimpulsauswertungen durchgeführt werden und unterschiedlichste Versorgungsspannungen für Messwertwandler ausgegeben werden. Das erfindungsgemäße Zusammenspiel der zuvor genannten Mittel ermöglicht es somit die bereits erwähnten Gebersysteme (Endat, SSI, Hyperface, Rechteckgeber, Sinusgeber, Panasonicgeber, Resolver, etc.) zu unterstützen.

Die erfindungsgemäße Anordnung ist vorzugsweise umfasst von einer Einrichtung zum Betrieb einer elektrischen Maschine, wobei die Einrichtungen einen Parameterspeicher umfasst, so dass die erfindungsgemäße Anordnung mittels zumindest eines im Parameterspeicher der Einrichtung abgelegten Parameters parametrierbar wird. Im Zuge der üblichen Parametrierung der Einrichtung (Antriebsregler bzw. Antriebsverstärker) während der Inbetriebnahme kann damit die erfindungsgemäße Anordnung gleichzeitig und automatisch ebenso während der Inbetriebnahme parametriert werden.

Die Aufgabe wird ebenfalls gelöst mittels eines Verfahrens zum Betrieb der Anordnung, wobei diese Anordnung selbsttätig eine Kommunikationsverbindung mit dem Messwertwandler herstellt, indem solange eine automatische und fortlaufende Auswahl von Kommunikationsprotokollen erfolgt, bis eine Kommunikationsverbindung hergestellt wurde. Die Anordnung versucht demgemäß zunächst durch Anwahl der unterschiedlichen in der Anordnung abgespeicherten und bereits zuvor erwähnten Protokolle (Endat, Hyperface, Panasonic, usw.) die Kommunikation mit dem Gebersystem aufzunehmen. Dies hat den Vorteil, dass abhängig vom Ergebnis dieses Verbindungsversuches weitere Schritte eingeleitet werden können, die vollständig automatisiert und selbstständig durch die erfindungsgemäße Anordnung ausführbar sind.
Vorzugsweise wird bei erfolgreicher Herstellung einer Kommunikationsverbindung mit dem Messwertsystem ein in der Regel von diesem Messwertsystemen umfasstes elektronisches Typenschild mittels der erfindungsgemäßen Anordnung voll automatisch ausgelesen. Der erfindungsgemäßen Anordnung sind nach dem Auslesen somit zumindest der Typ und die Auflösung des Gebersystems bekannt. Die Anordnung kann sich damit selbsttätig an diesen Geber adaptieren, ohne dass manuelle Eingriffe, beispielsweise von Instandsetzungspersonal, erforderlich werden. Diese erfindungsgemäße Lösung hilft somit Kosten und Zeit bei der Instandsetzung einzusparen.

Für den Fall, dass die Herstellung einer Kommunikationsverbindung fehl schlägt, kann die Anordnung einen Hinweis beispielsweise für das Instandsetzungspersonal, beispielsweise mittels eines HMI (Human Maschine Interface) ausgeben. Dies beugt einer Fehlersuche vor und hilft Zeit und Kosten einzusparen. In diesem Falle muss das Instandsetzungspersonal bzw. ein Bediener des Systems die Auflösung und die charakteristischen Daten des Messwertwandlers selbst ausfindig machen (beispielsweise mittels des mechanischen Typenschild eines Gebers) und über ein Parametrierinterface manuell vorgeben. Man kann diese Parameter dann im Parameterspeicher des Antriebsreglers, welchen beispielsweise die erfindungsgemäße Anordnung umfassen könnte, oder in einem Speicher der erfindungsgemäßen Anordnung abgelegen. Bei Parameterspeichern handelt es sich in der Regel nicht um flüchtige Speicher, so dass auch nach dem Abschalten die eingegebenen Parameter stets auch ohne Neueingabe wieder zur Verfügung stehen.

Die im folgenden beschriebenen Figuren sollen lediglich dem Verständnis der vorliegenden Erfindungen dienlich sein. Sie schränken die Erfindungen nicht etwa auf die Aufführungsbeispiele ein. Die Figuren sind grob schematisch gehalten, um die Prinzipien der Erfindung darzustellen. Die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.
Figur 1 zeigt in Form eines Blockschaltbildes den Aufbau der erfindungsgemäßen Anordnung.
Figur 2 zeigt etwas detaillierter als Figur 1 die Mittel, mittels derer die erfindungsgemäße Anordnung realisiert ist.
Figur 3 zeigt den möglichen Speicheraufbau zur Realisierung einer Ansteuermatrix.

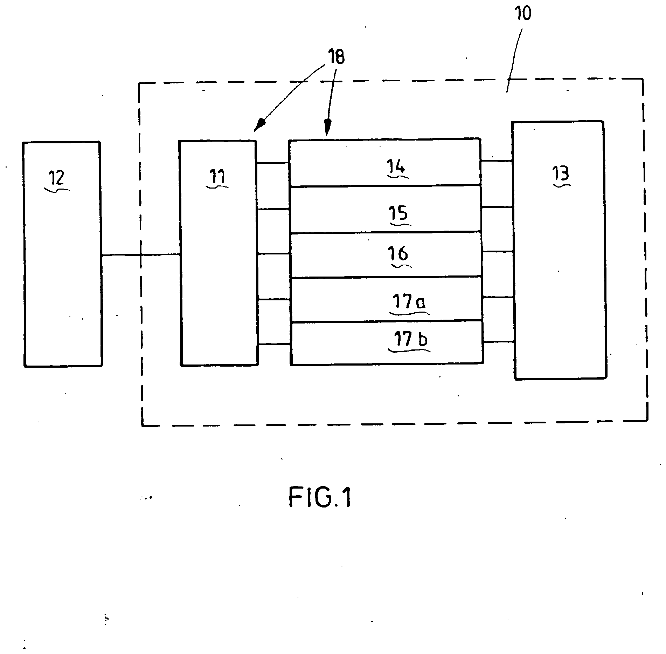

In Figur 1 ist die erfindungsgemäße Anordnung mit ihren Bestandteilen grob schematisch dargestellt. Die erfindungsgemäße Anordnung 10 (gestrichelte Linie) umfasst ein mechanisches Verbindungsmittel 11 zur lösbaren mechanischen Verbindung des Messwertwandlers 12 mit der erfindungsgemäßen Anordnung. Weiter sind von der erfindungsgemäßen Anordnung 10 umfasst das Auswertemittel 13, welches zur Auswertung der vom Messwertwandler 12 gelieferten Messdaten dient. Das Auswertemittel 13 bereitet die vom Messwertwandler 12 gelieferten Daten außerdem derart auf, dass sie beispielsweise von einer Antriebsregeleinrichtung oder einem Antriebsverstärker unmittelbar weiterverarbeitet werden können. Die Anbindung des Auswertemittels 13 an den Messwertwandler 12 erfolg mittels des Verbindungsmittels 18. Das Verbindungsmittel 18 umfasst neben einer mechanischen Schnittstelle 11 weitere Mittel 14,15,16,17a,17b zur elektrischen Anbindung des Auswertemittels 13 an den Messwertwandler 12. Das mechanische Verbindungsmittel 11 hat lediglich die Funktion die vom Messwertwandler 12 abgehenden Signalleitungen elektrisch mit dem Auswertemittel 13 zu verbinden, wohingegen die zwischen Auswertemittel 13 und mechanischer Schnittstelle 11 parallel geschalteten Mittel 14, 15, 16, 17a und 17b die elektrische und damit die signalseitige Anbindung des Auswertemittels 13 an den Messwertwandler 12 realisieren. Das Mittel 14 dient zur Erfassung der charakteristischen Eigenschaften der Messwerte des Messwertwandlers 12. Es dient beispielsweise dazu, die vom Messwertwandler gelieferten Signal messtechnisch zu erfassen. Es kann sich dabei sowohl um analoge als auch digitale Signale handeln. Damit Signale in digitaler Form weiterverarbeitet werden können, ist ebenfalls ein Digitalisierungsmittel 15 umfasst. Das Digitalisierungsmittel 15 empfängt mittels der mechanischen Schnittstelle 11 analoge Signale und wandelt diese in eine digitale Form derart um, dass diese vom Auswertemittel 13 auch in digitaler Form weiter verarbeitet können.

Als weiteres ist ein Spannungsversorgungsmittel 16 vorgesehen, welches zur Erzeugung von insbesondere mehreren Spannungspegeln dient. Diese Spannungspegel können beispielsweise Referenzspannungen sein, die für den Betrieb des Messwertwandlers erforderlich sind. Die zuvor genannten Spannungsversorgungsmittel könnten ebenfalls verwendet werden um eine Versorgungsspannung für den Messwertwandler bereit zu stellen.

Vom Verbindungsmittel 18 ebenfalls umfasst sind Datenübertragungsmittel 17a, 17b. Bei diesen Übertragungsmitteln 17a, 17b kann es sich beispielsweise um Treiberbausteine zur Kommunikation (z.B. mehrere RS485 Bausteine) handeln.

Sämtlich zuvor genannten Mittel 14, 15, 16, 17a und 17b belegen jeweils einen oder mehrere Anschlusspins an der mechanischen Schnittstelle 11 und sind parallel zwischen Auswertemittel 13 und mechanischer Schnittstelle 11 geschaltet. Dies bedeutet, dass ein gleichzeitiger Parallelbetrieb aller Mittel 14 15 16 17a, 17b realisierbar ist. Der Anordnung kann also demgemäß beispielsweise gleichzeitig ein empfangenes analoges Messsignal digitalisieren und ein Referenzsignal auswerten.

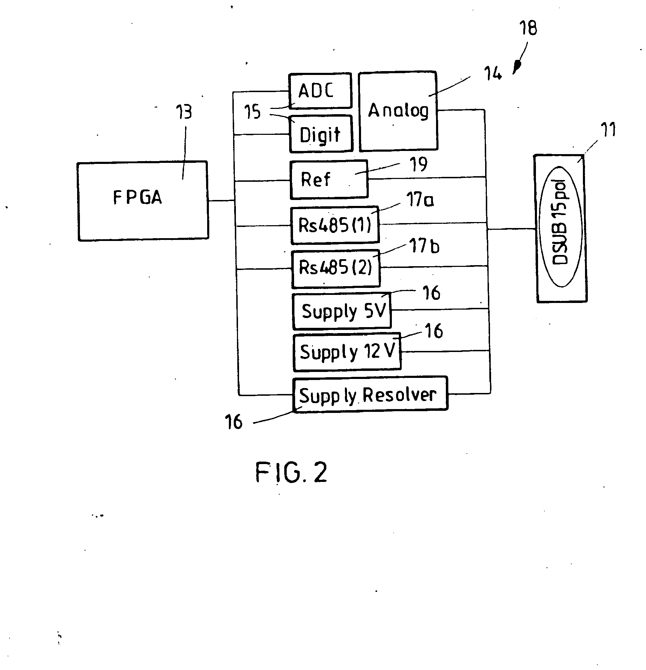

Figur 2 zeigt die erfindungsgemäße Anordnung etwas detaillierter als das Blockschaltbild der Figur 1. Es ist angedeutet, dass das Auswertemittel 13 in Form eines FPGA's (Field Programmable Gata Array) realisiert wurde. Das Verbindungsmittel 18 umfasst sowohl eine mechanische Schnittstelle 11 in Form eines DSUB-Steckers oder einer DSUB-Buchse und eine elektrische Schnittstelle, welche in Form einer Vielzahl von elektrischen Komponenten bzw. Mitteln realisiert ist (15 = ADC, 19 = Referenzimpulsauswertung, 15 = Digitalisiereinrichtung für eine Analogspureinrichtung, 17a,b = Treiber für Kommunikation und Rechteckauswertung, 16 = Versorgungsspannung für Gebersysteme und/oder Resolver).

All diese zuvor genannten Komponenten/Mittel sind zwischen FPGA 13 und mechanischer Schnittstelle 11 parallel angeordnet und können parallel betrieben werden. Die Aktivierung bzw. Deaktivierung und die Konfiguration dieser Komponenten/Mittel erfolgt durch Parametrierung mittels in einem von der Anordnung umfassten Speicher (nicht gezeigt) abgelegten Parametern. Die erfindungsgemäße Vorrichtung unterstützt bis zu zehn verschieden Gebersysteme für Messwerte und ist damit hoch flexibel.

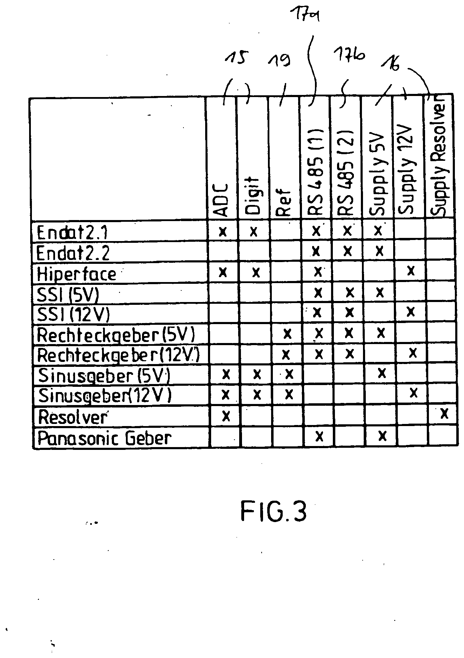

Figur 3 zeigt beispielhaft wie eine erfindungsgemäße Ansteuermatrix mittels einer Tabelle realisiert werden könnte. Figur 3 zeigt den Aufbau und den Inhalt der Tabelle. Die Tabelle besteht aus acht für die Ansteuerung relevanten Spalten und elf für die Ansteuerung relevanten Zeilen. Jede Spalte steht stellvertretend für einen der frei konfigurierbaren elektrischen Mittel 14,15,16,17a,b, die vom Verbindungsmittels 18 umfasst sind. Jede Zeile umfasst eine mögliche Betriebsart der erfindungsgemäßen Anordnung. An derjenigen Stelle, an der sich die Spalten und die Zeilen kreuzen, wird in der Tabelle vermerkt, welches der aus den Spalten bekannte Mittel 14,15,16,17a,b der erfindungsgemäßen Anordnung zur Realisierung der mittels der Zeilen definierten Betriebsart erforderlich sind.

Es sind beispielsweise zwei bidirektionale RS485 Treiber 17a,b implementiert. Für asynchrone Kommunikationen wie Hiperface und Panasonic, wird nur einer der beiden Treiber 17a,b benötigt. Wobei für Senden- und Empfangsbetrieb die Treiberrichtung umschaltbar ist. Für synchrone Kommunikationen wie Endat und SSI wird ein Treiber zum Senden des Taktes auf Ausgang gestellt. Der zweite Treiber wird zum Senden und Empfangen der Daten verwendet. Wobei die Richtung entsprechend umschaltbar ist. Für Rechteckgeber mit 5VTTL Pegel werden beide Treiber 17a,b zum Empfang der inkrementellen Signale auf Eingang gestellt. Es ist also eine Mehrfachnutzung der Treiber 17a,b und der angeschlossenen Pins auf dem Stecker realisiert.

Um Kompatibilität zum Gebersystems Endat 2.1 (erste Zeile) herzustellen wäre es nun gemäß Tabelle erforderlich die Mittel 15 = ADC + Digit, das Mittel 17a = RS485(1), das Mittel 17b = RS485(2) und das Mittel 16 = Supply 5 Volt zu parametrieren.

Zur Realisierung des Panasonic-Systems wäre es dagegen erforderlich lediglich die Mittel 17a = RS485(1) und 16 = Supply 5 Volt zu parametrieren. Das Panasonic-System hat ein - asynchrones Interface (UART) mit 2,5Mbaud. Die Kommunikation wird über einen RS485 Baustein realisiert (Umschalten senden/empfangen). Die Pegel entsprechen dem RS485 Standard. Die Versorgung ist 5V. Die Position wird mittels der erfindungsgemäßen Anordnung aus dem Gebersystem zyklisch ausgelesen. Das Auswertemittel der Anordnung ist Kommunikationsmaster.

Bei inkrementellen Gebern, wie Rechteckgeber oder sin/cos Gebern, ohne Kommunikation ist nach dem Einschalten nicht bekannt an welcher Position innerhalb einer mechanischen Umdrehung des Gebersystems man sich befindet. Diese Systeme geben pro Umdrehung einen kurzen Referenzimpuls aus (immer an der gleichen Stelle). Nach dem Einschalten wird die Achse bewegt, bis dieser Impuls erkannt wird. Somit kann die Position innerhalb einer Umdrehung ermittelt werden. Zur Realisierung eines Rechteckgebers (5V) wären die Mittel 17a = RS485(1), 17b=RS485(2) und 19 = Ref (Referenzimpulsauswertung) zu parametrieren.

Für sämtliche zu unterstützenden Messwertwandler ist daher die erforderliche Parametrierung der erfindungsgemäßen Anordnung aus der Tabelle auslesbar, so dass die erfindungsgemäße Anordnung mittels des FGA's oder einer sonstigen übergeordneten Logik parametrierbar wird. Die den einzelnen Messwertwandlerprinzipien zugeordneten Spalten könnten beispielsweise leicht durch ein 8 Bit Wort dargestellt werden. Das 8 Bit Word wird durch die dem Gebersystemen zugeordneten Zeilen repräsentiert. Wird ein Bit auf 1 gesetzt, so kann dies beispielsweise einem aktivierten Mittel 14,15,16,17a,b entsprechen. Wird dagegen ein Bit gelöscht (auf Null gesetzt) so könnte dies einer Deaktivierung des Mittels 14,15,16,17a,b entsprechen. Für die hier dargestellten zu unterstützenden elf Messwertwandler wären damit elf Parameter á 8 Bit erforderlich (11 x 8 Bit Worte)..

## Patentansprüche

1. Anordnung für eine Antriebsregeleinrichtung oder einen Antriebsverstärker zur Ansteuerung einer elektrischen Maschine,
wobei die Anordnung ein Auswertemittel (13) zur Auswertung der Messwerte eines Messwertwandlers (12) aufweist, die im Betrieb der elektrischen Maschine gemessen werden, und ein Verbindungsmittel (18) zur Anbindung des Auswertemittels (13) an den Messwertwandler (12) aufweist,
wobei das Verbindungsmittel (18) Mittel (11, 14, 15, 16, 17a, 17b) umfasst, welche zum Anschluss eines ersten Messwertwandlers (12) oder eines zweiten Messwertwandlers (12) ausgestaltet sind, wobei der erste Messwertwandler (12) für eine erste Messwertdatenübertragung der Messwerte und zudem zum Anschluss an eine erste Spannung ausgestaltet ist, wobei der zweite Messwertwandler (12) für eine zweite Messwertdatenübertragung der Messwerte und zudem zum Anschluss an eine zweite Spannung ausgestaltet ist, und wobei sich die zweite Messwertdatenübertragung von der ersten Messwertdatenübertragung und/oder die zweite Spannung von der ersten Spannung unterscheidet,
wobei die Mittel (11, 14, 15, 16, 17a, 17b) umfassen
ein mechanisches Verbindungsmittel (11) zur mechanischen Verbindung des ersten oder zweiten Messwertwandlers (12) mit dem Auswertemittel (13) und zur elektrischen Verbindung von von dem ersten oder zweiten Messwertwandler (12) abgehenden Signalleitungen mit dem Auswertemittel (13), und
eine elektrische Schnittstelle, die in Form einer Vielzahl von elektrischen Mitteln (14, 15, 16, 17a, 17b) realisiert ist, die zwischen dem mechanischen Verbindungsmittel (11) und dem Auswertemittel (13) derart parallel angeordnet sind und parallel betrieben werden können, dass mit dem Auswertemittel (13) über die elektrischen Mitteln (14, 15, 16, 17a, 17b) die Leitungen verbunden sind, die von dem mit dem mechanischen Verbindungsmittel (11) verbundenen Messwertwandler (12) für die Messwertdatenübertragung und für die Spannung abgehen,
wobei die Vielzahl von elektrischen Mittel umfassen
ein Messmittel (14) zur Erfassung der charakteristischen Eigenschaften der Messwerte des angeschlossenen ersten oder zweiten Messwertwandlers (12), wobei ein von dem angeschlossenen Messwertwandler (12) geliefertes Signal messtechnisch erfasst wird,
ein Digitalisierungsmittel (15) zur Digitalisierung der Messwerte des mit dem mechanischen Verbindungsmittel (11) verbundenen Messwertwandlers (12),
ein Spannungsversorgungsmittel (16) zur Erzeugung von, insbesondere zumindest zwei, Spannungspegeln, die als Versorgungsspannung für den mit dem mechanischen Verbindungsmittel (11) verbundenen Messwertwandler (12) ausgegeben werden oder Referenzspannungen sind, die für den Betrieb des mit dem mechanischen Verbindungsmittel (11) verbundenen Messwertwandlers (12) erforderlich sind, und
Datenübertragungsmittel (17a, 17b), die als Treiber zur Datenübertragung für eine Kommunikation zwischen dem Auswertemittel (13) und dem mit dem mechanischen Verbindungsmittel (11) verbundenen Messwertwandler (12) verwendbar sind oder für Rechteckgeber verwendbar sind,
wobei die elektrische Schnittstelle mittels Konfigurationsparametern in Form von binären Codes zumindest teilweise derart elektrisch konfigurierbar ausgestaltet ist, dass einzelne Mittel (14, 15, 16, 17a,b) der elektrischen Schnittstelle mit Bits der Codes gezielt einschaltbar oder abschaltbar sind, so dass eine für die Messwertdatenübertragung und für die Spannung geeignete Anbindung des Auswertemittels (13) an den mit dem mechanischen Verbindungsmittel (11) verbundenen ersten oder zweiten Messwertwandler (12) realisierbar ist.

2. Anordnung gemäß Anspruch 1, wobei die Datenübertragungsmittel (17a, 17b) für zumindest eine asynchrone oder eine synchrone Messwertdatenübertragung schaltbar sind.

3. Anordnung nach Anspruch 2, wobei für die Realisierung der asynchronen Messwertdatenübertragung ein erstes Datenübertragungsmittel (17a) vorgesehen ist, welches zwischen Sendebetrieb und Empfangsbetrieb umschaltbar ist.

4. Anordnung nach Anspruch 2 oder 3, wobei für die Realisierung der synchronen Messwertdatenübertragung ein zweites Datenübertragungsmittel (17b) vorgesehen ist, welches derart realisiert ist, dass dieses ein Taktsignal erzeugt und wobei das Senden und Empfangen von Messwertdaten mittels des ersten Datenübertragungsmittels (17a) erfolgt.

5. Anordnung nach Anspruch 3 oder 4, wobei beide Datenübertragungsmittel (17a,b) derart konfigurierbar sind, dass sie gleichzeitig Messwertdaten Senden und/oder Empfangen können.

6. Anordnung nach einem der vorhergehenden Ansprüche, wobei die Anordnung einen Speicher aufweist, in dem eine Ansteuermatrix zur Konfiguration mit den Konfigurationsparametern vorgesehen ist.

7. Anordnung nach einem der vorhergehenden Ansprüche, wobei die Anordnung bis zu elf sich bezüglich der Messwertdatenübertragung unterscheidende Arten von Messwertwandlern (12) unterstützt.

8. Anordnung nach einem der vorhergehenden Ansprüche, wobei das Auswertemittel (13) mittels eines programmierbaren Logikbausteins (13) realisiert ist.

9. Anordnung nach einem der vorhergehenden Ansprüche, wobei im Auswertemittel (13) unterschiedliche Kommunikationsprotokollbibliotheken zur Realisierung einer Kommunikation mit dem Messwertwandler (12) für die Messwertdatenübertragung abgespeichert sind.

10. Anordnung nach einem der vorhergehenden Ansprüche,
wobei der erste Messwertwandler ein Resolver ist,
wobei eine Steuerspannungserzeugung umfasst ist, und
wobei mit den Bits der Codes die Steuerspannungserzeugung gezielt eingeschaltet wird, um den ersten Messwertwandler an das Auswertemittel (13) anzubinden.

11. Anordnung nach Anspruch 10, wobei mittels der Anordnung ein alternierendes Erregersignal erzeugbar ist, welches an den Resolver (12) übertragbar ist und welches in Form zweier voneinander getrennter und in ihrer Phase verschobener und von einer Hüllkurve umgebener Signale empfangbar ist.

12. Anordnung nach einem der vorhergehenden Ansprüche, wobei mittels zumindest eines der folgenden Prinzipien übermittelte Messwerte auswertbar sind:
- nach dem Endat-Standard codierte Messwerte,
- nach dem Hiperface-Standard codierte Messwerte,
- nach dem SSI-Standard codierte Messwerte,
- zweispurige Rechtecksignale mit Referenzimpuls,
- zweispurige Sinussignale mit Referenzimpuls,
- die Ausgangsspannungen eines Resolvers,
- nach dem Panasonic-Standard codierte Messwerte

13. Anordnung nach Anspruch 12, wobei die Standards mittels einer Logik implementiert sind, welche vom als programmierbarer Logikbaustein realisierten Auswertemittel (13) umfasst ist und mittels dieses Logikbausteins ausführbar sind.

14. Anordnung nach einem der vorhergehenden Ansprüche, wobei die Anordnung derart realisiert ist, dass mittels einer einzigen elektrischen Leitung die Versorgungsspannung des Messwertwandlers (12) messbar ist, wobei bei Unterschreitung eines parametrierbaren Schwellwertes dieser Versorgungsspannung dieselbe unter Berücksichtigung des Messwertes im wesentlichen bis zum Schwellwert wieder angehoben werden kann.

15. Anordnung nach einem der vorangehenden Ansprüche, wobei das Verbindungsmittel (18) ein Mittel (19) zur Auswertung eines von dem Messwertwandler (12) generierbaren Referenzimpulses umfasst.

16. Einrichtung zum Betrieb einer elektrischen Maschine, umfassend einen Parameterspeicher und eine Anordnung nach einem der vorhergehenden Ansprüche, wobei die Anordnung mittels zumindest eines im Parameterspeicher abgelegten Konfigurationsparameters parametrierbar ist.

17. Einrichtung nach Anspruch 16,
wobei die Einrichtung eine Antriebsregeleinrichtung oder ein Antriebsverstärker ist, die jeweils zur Ansteuerung der elektrischen Maschine ausgestaltet sind, und
wobei die elektrische Maschine zur Bearbeitung von Werkstücken oder zum Transport von Gegenständen oder für Automatisierungszwecke oder Druckmaschine ausgestaltet ist.

18. Elektrischer Antrieb umfassende eine Einrichtung nach Anspruch 16 oder 17 und eine elektrische Maschine, wobei die elektrische Maschine ein elektrischer Motor mit Positionsgeber ist, wobei der Motor und der Positionsgeber mit der Anordnung (10) verbunden sind.

## Claims

1. Arrangement for a drive control device or a drive amplifier for actuating an electric machine,
wherein the arrangement has an evaluation means (13) for evaluating the measured values of a measured value converter (12) that are measured during operation of the electric machine and a connecting means (18) for connecting the evaluation means (13) to the measured value converter (12),
wherein the connecting means (18) comprises means (11, 14, 15, 16, 17a, 17b) that are designed for connecting a first measured value converter (12) or a second measured value converter (12), wherein the first measured value converter (12) is designed for a first measured value data transmission of the measured values and also for connection to a first voltage, wherein the second measured value converter (12) is designed for a second measured value data transmission of the measured values and also for connection to a second voltage, and wherein the second measured value data transmission differs from the first measured value data transmission and/or the second voltage differs from the first voltage,
wherein the means (11, 14, 15, 16, 17a, 17b) comprise a mechanical connecting means (11) for mechanically connecting the first or second measured value converter (12) to the evaluation means (13) and for electrically connecting signal lines leaving the first or second measured value converter (12) to the evaluation means (13), and
an electrical interface realized in the form of a multiplicity of electrical means (14, 15, 16, 17a, 17b) that are arranged in parallel, and can be operated in parallel, between the mechanical connecting means (11) and the evaluation means (13) such that the lines that leave the measured value converter (12) connected to the mechanical connecting means (11) for the measured value data transmission and for the voltage are connected to the evaluation means (13) via the electrical means (14, 15, 16, 17a, 17b),
wherein the multiplicity of electrical means comprise a measuring means (14) for capturing the characteristic properties of the measured values of the connected first or second measured value converter (12), wherein a signal delivered by the connected measured value converter (12) is captured by measurement,
a digitization means (15) for digitizing the measured values of the measured value converter (12) connected to the mechanical connecting means (11),
a power supply means (16) for generating, in particular at least two, voltage levels that are output as a supply voltage for the measured value converter (12) connected to the mechanical connecting means (11) or are reference voltages required for the operation of the measured value converter (12) connected to the mechanical connecting means (11), and
data transmission means (17a, 17b) that are usable as drivers for data transmission for a communication between the evaluation means (13) and the measured value converter (12) connected to the mechanical connecting means (11) or are usable for square-wave generators,
wherein the electrical interface is designed to be electrically configurable by means of configuration parameters in the form of binary codes at least in some cases such that individual means (14, 15, 16, 17a,b) of the electrical interface are able to be selectively switched on or off by means of bits of the codes, so that the evaluation means (13) is able to be connected to the first or second measured value converter (12), which is connected to the mechanical connecting means (11), in a manner suitable for the measured value data transmission and for the voltage.

2. Arrangement according to Claim 1, wherein the data transmission means (17a, 17b) are connectable for at least an asynchronous or a synchronous measured value data transmission.

3. Arrangement according to Claim 2, wherein for the purpose of performing the asynchronous measured value data transmission there is provision for a first data transmission means (17a), which is switchable between send mode and receive mode.

4. Arrangement according to Claim 2 or 3, wherein for the purpose of performing the synchronous measured value data transmission there is provision for a second data transmission means (17b), which is realized such that it generates a clock signal, and wherein measured value data are sent and received by means of the first data transmission means (17a).

5. Arrangement according to Claim 3 or 4, wherein the two data transmission means (17a,b) are configurable such that they can send and/or receive measured value data at the same time.

6. Arrangement according to one of the preceding claims, wherein the arrangement has a memory in which there is provision for an actuation matrix for configuration using the configuration parameters.

7. Arrangement according to one of the preceding claims, wherein the arrangement supports up to eleven types of measured value converters (12), which differ in terms of the measured value data transmission.

8. Arrangement according to one of the preceding claims, wherein the evaluation means (13) is realized by means of a programmable logic chip (13).

9. Arrangement according to one of the preceding claims, wherein the evaluation means (13) store different communication protocol libraries for performing a communication with the measured value converter (12) for the measured value data transmission.

10. Arrangement according to one of the preceding claims,
wherein the first measured value converter is a resolver,
wherein a control voltage generation unit is included, and
wherein the bits of the codes are used to selectively switch on the control voltage generation unit in order to connect the first measured value converter to the evaluation means (13).

11. Arrangement according to Claim 10, wherein an alternating exciter signal is generable by means of the arrangement, said exciter signal being transmittable to the resolver (12) and being receivable in the form of two separate phase-shifted signals surrounded by an envelope.

12. Arrangement according to one of the preceding claims, wherein measured values conveyed by means of at least one of the following principles are evaluable:
- measured values encoded using the Endat standard,
- measured values encoded using the Hiperface standard,
- measured values encoded using the SSI standard,
- two-track square-wave signals with a reference impulse,
- two-track sine-wave signals with a reference impulse,
- the output voltages of a resolver,
- measured values encoded using the Panasonic standard.

13. Arrangement according to Claim 12, wherein the standards are implemented by means of a logic that the evaluation means (13) realized as a programmable logic chip comprises and are performable by means of this logic chip.

14. Arrangement according to one of the preceding claims, wherein the arrangement is realized such that the supply voltage of the measured value converter (12) is measurable by means of a single electrical line, wherein a drop below a parameterizable threshold value for this supply voltage results in same being able to be raised again substantially to the threshold value while taking into consideration the measured value.

15. Arrangement according to one of the preceding claims, wherein the connecting means (18) comprises a means (19) for evaluating a reference impulse generable by the measured value converter (12).

16. Device for operating an electric machine, comprising a parameter memory and an arrangement according to one of the preceding claims, wherein the arrangement is parameterizable by means of at least one configuration parameter stored in the parameter memory.

17. Device according to Claim 16,
wherein the device is a drive control device or a drive amplifier, each of which is designed for actuating the electric machine, and
wherein the electric machine is designed for machining workpieces or for transporting items or for automation purposes or printing press.

18. Electric drive comprising a device according to Claim 16 or 17 and an electric machine, wherein the electric machine is an electric motor having a position sensor, wherein the motor and the position sensor are connected to the arrangement (10).

## Revendications

1. Agencement pour un dispositif de régulation d'entraînement ou un variateur pour piloter une machine électrique,
dans lequel l'agencement présente un moyen d'évaluation (13) pour évaluer les valeurs de mesure d'un convertisseur de valeurs de mesure (12) qui sont mesurées en cours de fonctionnement de la machine électrique, et un moyen de liaison (18) pour relier le moyen d'évaluation (13) au convertisseur de valeurs de mesure (12),
dans lequel le moyen de liaison (18) comprend des moyens (11, 14, 15, 16, 17a, 17b) qui sont conçus pour connecter un premier convertisseur de valeurs de mesure (12) ou un deuxième convertisseur de valeurs de mesure (12), le premier convertisseur de valeurs de mesure (12) étant conçu pour une première transmission de données de valeurs de mesure des valeurs de mesure et de plus pour la connexion à une première tension, le deuxième convertisseur de valeurs de mesure (12) étant conçu pour une deuxième transmission de données de valeurs de mesure des valeurs de mesure et de plus pour la connexion à une deuxième tension, et dans lequel la deuxième transmission de données de valeurs de mesure est différente de la première transmission de données de valeurs de mesure et/ou la deuxième tension est différente de la première tension,
dans lequel les moyens (11, 14, 15, 16, 17a, 17b) comprennent
un moyen de liaison mécanique (11) pour relier mécaniquement le premier ou le deuxième convertisseur de valeurs de mesure (12) au moyen d'évaluation (13) et pour relier électriquement au moyen d'évaluation (13) des lignes de signal partant du premier ou du deuxième convertisseur de valeurs de mesure (12), et
une interface électrique qui est réalisée sous la forme d'une pluralité de moyens électriques (14, 15, 16, 17a, 17b) qui sont disposés en parallèle entre le moyen de liaison mécanique (11) et le moyen d'évaluation (13) et peuvent être actionnés en parallèle de telle sorte que les lignes qui partent du convertisseur de valeurs de mesure (12), relié au moyen de liaison mécanique (11), pour la transmission de données de valeurs de mesure et pour la tension sont reliées au moyen d'évaluation (13) par les moyens électriques (14, 15, 16, 17a, 17b)
dans lequel la pluralité de moyens électriques comprend
un moyen de mesure (14) pour détecter les propriétés caractéristiques des valeurs de mesure du premier ou du deuxième convertisseur de valeurs de mesure (12) connecté, un signal fourni par le convertisseur de valeurs de mesure (12) connecté étant détecté par des moyens métrologiques,
un moyen de numérisation (15) pour numériser les valeurs de mesure du convertisseur de valeurs de mesure (12) relié au moyen de liaison mécanique (11),
un moyen d'alimentation en tension (16) pour produire en particulier au moins deux niveaux de tension qui sont sortis en tant que tension d'alimentation pour le convertisseur de valeurs de mesure (12) relié au moyen de liaison mécanique (11) ou sont des tensions de référence qui sont nécessaires au fonctionnement du convertisseur de valeurs de mesure (12) relié au moyen de liaison mécanique (11), et
des moyens de transmission de données (17a, 17b) qui sont utilisables comme pilotes pour la transmission de données pour une communication entre le moyen d'évaluation (13) et le convertisseur de valeurs de mesure (12) relié au moyen de liaison mécanique (11) ou sont utilisables pour des transducteurs rectangulaires,
dans lequel l'interface électrique est conçue de manière électriquement configurable à l'aide de paramètres de configuration sous la forme de codes binaires au moins en partie de telle sorte que des moyens individuels (14, 15, 16, 17a,b) de l'interface électrique peuvent être mis en ou hors circuit de manière ciblée par des bits des codes de telle sorte qu'une liaison du moyen d'évaluation (13) au premier ou au deuxième convertisseur de valeurs de mesure (12) relié au moyen de liaison mécanique (11), adaptée à la transmission de données de valeurs de mesure et à la tension, est réalisable.

2. Agencement selon la revendication 1, dans lequel les moyens de transmission de données (17a, 17b) peuvent être commutés pour au moins une transmission de données de valeurs de mesure asynchrone ou synchrone.

3. Agencement selon la revendication 2, dans lequel un premier moyen de transmission de données (17a), qui peut être commuté entre un mode émission et un mode réception, est prévu pour la réalisation de la transmission de données de valeurs de mesure asynchrone.

4. Agencement selon la revendication 2 ou 3, dans lequel un deuxième moyen de transmission de données (17b) est prévu pour la réalisation de la transmission de données de valeurs de mesure synchrone et est réalisé de telle sorte qu'il produit un signal d'horloge, et dans lequel l'émission et la réception de données de valeurs de mesure sont effectuées à l'aide du premier moyen de transmission de données (17a).

5. Agencement selon la revendication 3 ou 4, dans lequel les deux moyens de transmission de données (17a, b) sont configurables de telle sorte qu'ils peuvent en même temps émettre et/ou recevoir des données de valeur de mesure.

6. Agencement selon l'une quelconque des revendications précédentes, dans lequel l'agencement présente une mémoire dans laquelle est prévue une matrice de pilotage pour la configuration avec les paramètres de configuration.

7. Agencement selon l'une quelconque des revendications précédentes, dans lequel l'agencement prend en charge jusqu'à onze types de convertisseurs de valeurs de mesure (12) différents en matière de transmission de données de valeurs de mesure.

8. Agencement selon l'une quelconque des revendications précédentes, dans lequel le moyen d'évaluation (13) est réalisé à l'aide d'un module logique programmable (13).

9. Agencement selon l'une quelconque des revendications précédentes, dans lequel différentes bibliothèques de protocole de communication sont enregistrées dans le moyen d'évaluation (13) pour réaliser une communication avec le convertisseur de valeurs de mesure (12) pour la transmission de données de valeurs de mesure.

10. Agencement selon l'une quelconque des revendications précédentes,
dans lequel le premier convertisseur de valeurs de mesure est un résolveur,
dans lequel une génération de tension de commande est incluse, et
dans lequel les bits des codes permettent de mettre sous tension de manière ciblée la génération de tension de commande pour relier le premier convertisseur de valeurs de mesure au moyen d'évaluation (13).

11. Agencement selon la revendication 10, dans lequel l'agencement permet de produire un signal d'excitation alternatif qui peut être transmis au résolveur (12) et qui peut être reçu sous la forme de deux signaux séparés l'un de l'autre et déphasés et entourés d'une enveloppe.

12. Agencement selon l'une quelconque des revendications précédentes, dans lequel au moins l'un des principes suivants permet d'évaluer des valeurs de mesure transmises :
- des valeurs de mesure codées selon la norme EnDat,
- des valeurs de mesure codées selon la norme Hiperface,
- des valeurs de mesure codées selon la norme SSI,
- des signaux rectangulaires bipistes et à impulsion de référence,
- des signaux sinusoïdaux bipistes et à impulsion de référence,
- les tensions de sortie d'un résolveur,
- des valeurs de mesure codées selon la norme Panasonic.

13. Agencement selon la revendication 12, dans lequel les normes sont mises en œuvre à l'aide d'une logique comprise dans le moyen d'évaluation (13) réalisé sous la forme d'un module logique programmable, et qui peut être exécutée à l'aide de ce module logique.

14. Agencement selon l'une quelconque des revendications précédentes, dans lequel l'agencement est réalisé de telle sorte que la tension d'alimentation du convertisseur de valeurs de mesure (12) peut être mesurée à l'aide d'une seule ligne électrique, dans lequel, en cas de soupassement d'une valeur seuil paramétrable de cette tension d'alimentation, celle-ci peut être relevée à nouveau substantiellement jusqu'à la valeur seuil en tenant compte de la valeur de mesure.

15. Agencement selon l'une quelconque des revendications précédentes, dans lequel le moyen de liaison (18) comprend un moyen (19) pour évaluer une impulsion de référence pouvant être produite par le convertisseur de valeurs de mesure (12).

16. Dispositif pour faire fonctionner une machine électrique, comprenant une mémoire de paramètres et un agencement selon l'une quelconque des revendications précédentes, l'agencement étant paramétrable à l'aide d'au moins un paramètre de configuration enregistré dans la mémoire de paramètres.

17. Dispositif selon la revendication 16,
dans lequel le dispositif est un dispositif de régulation d'entraînement ou un variateur qui est respectivement conçu pour piloter la machine électrique, et
dans lequel la machine électrique est conçue pour usiner des pièces à travailler ou pour transporter des objets ou à des fins d'automatisation ou une presse à imprimer.

18. Entraînement électrique comprenant un dispositif selon la revendication 16 ou 17 et une machine électrique, la machine électrique étant un moteur électrique muni d'un capteur de position, le moteur et le capteur de position étant reliés à l'agencement (10) .
